# EUROPÄISCHE PATENTSCHRIFT

(11) **EP 2 493 766 B1**
(45) Veröffentlichungstag und Bekanntmachung des Hinweises auf die Patenterteilung: **16.07.2014**
(21) Anmeldenummer: 10776618.0
(22) Anmeldetag: 22.10.2010
(51) Int. Cl.: B65B 69/00, B65G 65/23

(54) **VERFAHREN UND VORRICHTUNG ZUR KONTROLLIERTEN ENTLEERUNG EINES MIT STÜCKGÜTERN GEFÜLLTEN TRANSPORTBEHÄLTERS**
METHOD AND APPARATUS FOR THE CONTROLLED EMPTYING OF A TRANSPORT CONTAINER FILLED WITH ARTICLES
PROCEDE ET APPAREIL POUR LE VIDAGE CONTROLE D'UN CONTENEUR DE TRANSPORT, REMPLI D'ARTICLES

(30) Priorität: 27.10.2009 DE 102009050901
(43) Veröffentlichungstag der Anmeldung: 05.09.2012
(73) Patentinhaber: Siemens Aktiengesellschaft, 80333 München (DE)
(72) Erfinder: SCAGLIOLA, Andrea, 92260 Ammerthal (DE); TANZ, Torsten, 78247 Hilzingen (DE)
(86) Internationale Anmeldenummer: PCT/EP2010/065990
(87) Internationale Veröffentlichungsnummer: WO 2011/051189

(56) Entgegenhaltungen:
- FR-A1- 2 689 872
- US-A1- 2001 005 688
- US-A1- 2007 201 970
- US-B1- 6 190 110

## Beschreibung

Die Erfindung betrifft ein Verfahren und eine Vorrichtung zur automatisierten Entleerung von Paketen und Päckchen oder dergl. Stückgüter aus einem die Stückgüter aufnehmenden Sammel- oder Transportbehälter, der dazu mittels einer den Behälter zumindest vorübergehend aufnehmenden Kippvorrichtung nach einem definierten Bewegungsschema in eine Entleerstellung verschwenkbar ist.

Paketdienste (z.B. DHL) transportieren Pakete und Päckchen auf kurzen Distanzen gestapelt in Sammel- oder Transportbehältern, wie Rollcontainern oder ähnlichen Ladeeinheiten, in denen die Pakete vorteilhafterweise lose eingestapelt sind. Das Entstapeln erfolgt manuell oder teilautomatisiert; üblicherweise werden die dem Sammel- oder Transportbehälter entnommenen Pakete einzeln oder im Pulk auf Transportbänder aufgegeben, um sie an nachfolgende Sortier- oder Vereinzelungstechnologien weiterzuleiten. Methoden, bei denen die Sammel- oder Transportbehälter mechanisiert ausgekippt werden, haben zwar häufig höhere Beschädigungsraten der Transportgüter zur Folge, sind aber im Hinblick auf die kürzeren Zykluszeiten effektiver.

Bekannt ist die automatische Entleerung von Behältern durch "Auskippen", welches nach einem vorher definierten, festen Bewegungsschema erfolgt. Ein intern bekannter Stand der Technik schlägt vor, eine automatisierte Vorrichtung zum Kippen von Ladeeinheiten, wie Rollcontainer oder dergl. zu verwenden, bei der die Ladeeinheit mit einer offenen Seitenwand gegen eine vertikal ausgerichtete Wandfläche bewegt wird, die zusammen mit der daran anliegenden Ladeeinheit in eine horizontale oder annähernd horizontal geneigte Position bewegbar ist, aus der heraus alleine die Ladeeinheit in ihre aufrechte Position zurückbewegbar ist. Die Stückgüter, Pakete oder Päckchen, verbleiben, mehr oder weniger gestapelt, auf der nunmehr horizontalen Wandfläche und werden von dort fördertechnisch ausgetragen und dabei vereinzelt.

Mit dem bekannten Vorschlag werden die bei dem Vorgang des Kippens auftretenden dynamischen Kräfte zwar aufgeteilt und reduziert, weil durch das Umlegen auf die und zusammen mit der geneigten Wandfläche nur vereinzelte Kräfte auf die Pakete oder Stückgüter wirken, nachteilig ist aber, dass vor einer erfolgenden Vereinzelung der gesamte Inhalt der Ladeeinheit auf der Abführvorrichtung abgeladen wird. Im Gegensatz zu einer manuellen Entladung, bei der die Pakete bereits einzeln auf die Abführvorrichtung gelegt werden, benötigt die bekannte Vorrichtung mehr Platz und ist nicht effektiv hinsichtlich der Entladeleistung.

Die Aufgabe der vorliegenden Erfindung besteht darin, eine effektive automatisierte Lösung zur gutschonenden Entleerung von Paketen und Päckchen oder dergl. Stückgütern aus Sammel- oder Transportbehältern zu schaffen, die bei niedrigen Zykluszeiten gleichzeitig eine Minimierung der auftretenden Beschädigungen ermöglicht.

Zur Lösung der Aufgabe wird erfindungsgemäß vorgeschlagen, dass der Sammel- oder Transportbehälter ausgekippt wird, wobei das Bewegungsschema und damit der Auskippvorgang des Sammel- oder Transportbehälters in Abhängigkeit von dem aktuellen Entleervorgang und/oder unter Berücksichtigung der Geschwindigkeit und/oder Menge der ausgekippten Stückgüter beschleunigbar oder verzögerbar ist.

Der Grundgedanke der Erfindung besteht darin, Stückgüter nicht mehr als Ganzes oder unkontrolliert und ungebremst aus dem Sammel- oder Transportbehälter auf einen Stapel auszuleeren; statt dessen werden die Stückgüter, z.B. Pakete, einzeln oder in kleinen Mengen und möglichst nacheinander schonend aus dem Sammel- oder Transportbehälter entleert. Dadurch wird eine Beschädigung der Stückgüter minimiert, da nicht mehr, wie bisher, schwere Pakete auf Stapel leichter Pakete unkontrolliert abgeworfen werden.

Nach einem gestaltenden Merkmal der Erfindung wird vorgeschlagen, dass der aktuelle Entleervorgang von einer vorzugsweise mehrdimensionalen Sensorik erfasst und in einer Sensor-Datenanalyse ausgewertet wird, die mit der Steuerung des Antriebs der Kippvorrichtung für den Sammel- oder Transportbehälter gekoppelt ist. Die Sensorik kontrolliert erfindungsgemäß den Entladevorgang und das Auswerfen der Stückgüter während des Kippvorganges des Behälters und greift in die Steuerung des Antriebes der Kippantriebs ein, wenn zu viele oder zu wenig Stückgüter aus dem Sammel- oder Transportbehälter ausgeworfen werden. Dadurch werden nicht nur die Stückgüter geschont; es findet bereits beim Ausleeren der Sammel- oder Transportbehälter eine Vorvereinzelung der beispielsweise einem Sorter zugeleiteten Stückgüter statt.

Vorzugsweise wird der aktuelle Entleervorgang des Behälters mittels einer bekannten Bilderkennungssensorik oder eines 3D-Scanners erfasst. Anhand der erhaltenen Informationen werden, nach Auswertung der Informationen in einem Rechner, die Anzahl und/oder die Geschwindigkeit der den Sammel- oder Transportbehälter verlassenden Stückgüter durch Verzögerung oder Beschleunigung des Kippvorganges gesteuert. Fallen zu viele Stückgüter, so wird der Sammel- oder Transportbehälter bzw. die Kippvorrichtung in Richtung seiner Ausgangslage zurück gekippt, werden zu wenige Stückgüter entleert, so wird der Sammel- oder Transportbehälter weiter nach vorn in Richtung der Abführvorrichtung gekippt, so dass mehr Stückgüter aus dem Sammel- oder Transportbehälter fallen können. Wenn die heraus gefallenen Pakete unmittelbar abgeführt werden können, wird auch sichergestellt, dass die Stückgüter nicht aufeinander fallen und beschädigt werden können.

Wenn nach einem anderen Vorschlag der Erfindung mittels der Sensorik die vollständige Entleerung des Sammel- oder Transportbehälters erfasst wird, kann der Verschwenkvorgang der Kippvorrichtung in den Ausgangszustand des Behälters eingeleitet werden.

Erfindungsgemäß ist ein die Stückgüter aufnehmender Sammel- oder Transportbehälter als Rollcontainer ausgebildet, deren aus Paketen und Päckchen oder ähnlichem Postgut bestehender Inhalt auf eine Abführvorrichtung vor oder innerhalb einer Vereinzelungsvorrichtung und/oder einem Sorter abkippbar ist. Die Abführvorrichtung kann vorzugsweise als Gurtförderer ausgebildet sein; es ist auch ein Abkippen der Stückgüter unmittelbar in eine Vereinzelungsvorrichtung oder auf einen Sorter denkbar.

Mit der Erfindung wird erstmals ein sensorgesteuerter Regelkreis für eine Vorrichtung dieser Art zum Einsatz gebracht, mit der eine Minimierung der Beschädigungen der Stückgüter und eine gleichzeitige Verringerung der Zykluszeiten zu erwarten ist.

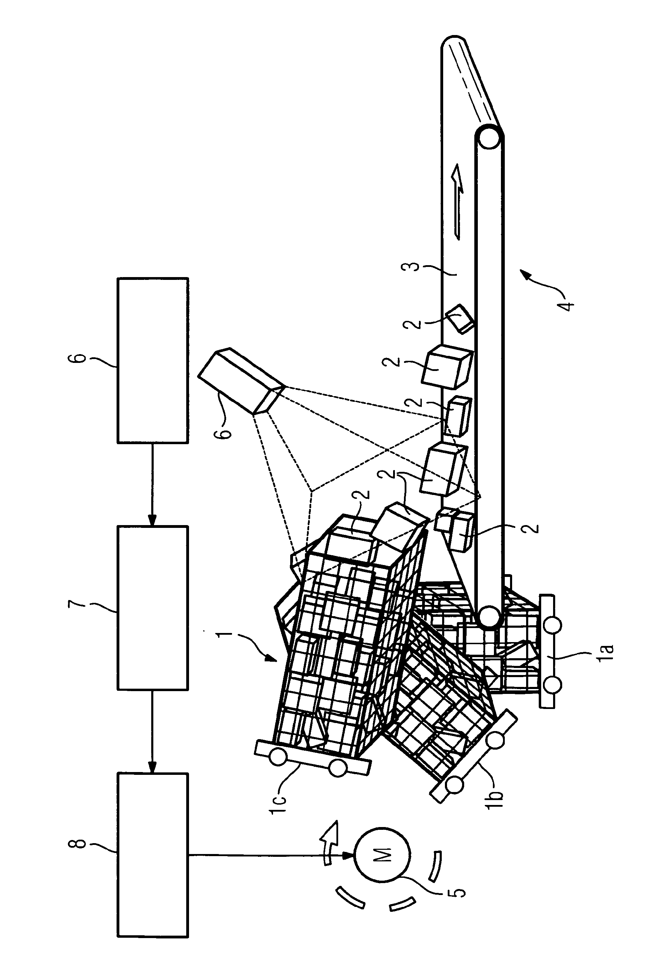

Eine erfindungsgemäße Vorrichtung zur Durchführung des Verfahrens ist in der Zeichnung dargestellt und wird nachfolgend beschrieben. Gezeigt ist in der Zeichnung ein Sammel- oder Transportbehälter in Form eines Rollcontainers 1, in dem eine große Anzahl von Paketen und Päckchen 2 gestapelt ist. Der Rollcontainer 1 wird vor einem Gurtförderer 3 einer Abführvorrichtung 4 in einer - nicht dargestellten - Kippvorrichtung positioniert und gehalten. Zur Einleitung des Kippvorganges wird der Rollcontainer 1 aus der Position 1a über die Position 1 b in die Position 1c oder irgendeine Zwischenposition verschwenkt, wozu die Kippvorrichtung motorisch, wie bei 5 symbolisiert, angetrieben wird. Ein 3D-Scanner 6 erfasst die aus dem Rollcontainer 1 herausgeworfenen Pakete 2 und leitet eine Sensor-Datenanalyse 7 ein. Je nach erkannter Situation wird der Kippvorgang des Rollcontainers 1 gesteuert 8 über den motorischen Antrieb 5 der Kippvorrichtung so beschleunigt oder verzögert, dass weder zu wenige noch zu viele Pakete 2 gleichzeitig auf die Abführvorrichtung 4 gelangen.

Die abgeworfenen Pakete 2 werden indes durch den Gurtförderer 3 der Abführvorrichtung 4 abtransportiert, sobald sie den Rollcontainer 1 verlassen haben und auf den Gurtförderer 3 gelangt sind. Sobald der 3D-Scanner 6 über die Sensor-Datenanalyse 7 die vollständige Entleerung des Rollcontainers 1 erkannt hat, werden die Kippvorrichtung und damit der Rollcontainer 1 motorisch 5 in die Ausgangsposition 1a zurück geschwenkt. Der Rollcontainer 1 kann nun entfernt und in einem kurzen Zyklus durch einen neuen vollen Rollcontainer 1 ersetzt werden.

## Patentansprüche

1. Verfahren zur automatisierten Entleerung von Paketen und Päckchen oder dergl. Stückgüter aus einem die Stückgüter aufnehmenden Sammel- oder Transportbehälter, der dazu mittels einer den Behälter zumindest vorübergehend aufnehmenden Kippvorrichtung nach einem definierten Bewegungsschema in eine Entleerstellung verschwenkbar ist,
**dadurch gekennzeichnet, dass** der Sammel- oder Transportbehälter ausgekippt wird, wobei das Bewegungsschema und damit der Auskippvorgang des Sammel- oder Transportbehälters in Abhängigkeit von dem aktuellen Entleervorgang und/oder unter Berücksichtigung der Geschwindigkeit und/oder Menge der ausgekippten Stückgüter beschleunigbar oder verzögerbar ist.

2. Verfahren zur automatisierten Entleerung von Behältern nach Anspruch 1,
**dadurch gekennzeichnet, dass**
der aktuelle Entleervorgang von einer vorzugsweise mehrdimensionalen Sensorik erfasst und in einer Sensor-Datenanalyse ausgewertet wird, die mit der Steuerung des Antriebs der Kippvorrichtung für den Sammel- oder Transportbehälter gekoppelt ist.

3. Verfahren zur automatisierten Entleerung von Behältern nach Anspruch 1 und 2,
**dadurch gekennzeichnet, dass**
der aktuelle Entleervorgang des Sammel- oder Transportbehälters mittels einer Bilderkennungssensorik oder eines 3D-Scanners erfasst wird und dass nach Auswertung der erhaltenen Informationen in einem Rechner die Anzahl der den Sammel- oder Transportbehälter verlassenden Stückgüter durch Verzögerung oder Beschleunigung des Kippvorganges gesteuert wird.

4. Verfahren zur automatisierten Entleerung von Behälter nach einem der Ansprüche 1 bis 3,
**dadurch gekennzeichnet, dass**
mittels der Sensorik die vollständige Entleerung des Sammel- oder Transportbehälters erfasst wird, die den Verschwenkvorgang der Kippvorrichtung in den Ausgangszustand des Sammel- oder Transportbehälters einleitet.

5. Vorrichtung zur automatisierten Entleerung von Stückgütern aus Behältern, (1) mit einem die Stückgüter (2) aufnehmenden Rollcontainer (1), einer Kippvorrichtung, einer Abführvorrichtung (4) vor oder innerhalb einer Vereinzelungsvorrichtung und/oder einem Sorter, und einem Antrieb (5) zur Einleitung eines Kippvorgangs des Rollkontainers (1), sowie einer Steuerung des Antriebs (5), und einer Sensorik (6), die mit der Steuerung des Antriebs (5) gekoppelt ist und den aktuellen Entleervorgang erfasst, und die derart ausgebildet ist, dass das Bewegungsschema nach Anspruch 1 ermöglicht wird.

## Claims

1. Method for the automated emptying of packets and packages of similar piece goods from a collection or transport container holding the piece goods, said container being pivotable to this end by means of a tipping device at least temporarily holding the container, according to a defined motion schema, into an emptying position, **characterized in that** the collection or transport container is tipped out, wherein the motion schema and thus the tipping procedure of the collection or transport container can be accelerated or decelerated as a function of the current emptying procedure and/or taking into consideration the speed and/or amount of the tipped-out piece goods.

2. Method for the automated emptying of containers according to Claim 1, **characterized in that** the current emptying procedure is detected by a preferably multi-dimensional sensor and is evaluated in a sensor data analysis coupled to the controller of the drive of the tipping device for the collection or transport container.

3. Method for the automated emptying of containers according to Claims 1 and 2, **characterized in that** the current emptying procedure of the collection or transport container is detected by means of an image recognition sensor or a 3D scanner, and **in that**, after the information obtained has been evaluated in a computer, the number of piece goods leaving the collection or transport container is controlled by deceleration or acceleration of the tipping procedure.

4. Method for the automated emptying of containers according to one of Claims 1 to 3, **characterized in that** the complete emptying of the collection or transport container is detected by means of the sensor which initiates the pivoting procedure of the tipping device in the starting state of the collection or transport container.

5. Device for the automated emptying of piece goods from containers (1), having a rolling container (1) holding the piece goods (2), a tipping device, a removal device (4) before or within a singulating device and/or a sorter, and a drive (5) for initiating a tipping procedure of the rolling container (1), and a controller of the drive (5), and a sensor (6) which is coupled to the controller of the drive (5) and detects the current emptying procedure and which is designed in such a manner that the motion schema according to Claim 1 is made possible.

## Revendications

1. Procédé pour vider de manière automatisée d'un récipient collecteur ou de transport recevant des colis et des paquets ou des marchandises analogues, qui, à cet effet, peut, à l'aide d'un dispositif de basculement recevant au moins temporairement le récipient, être basculé suivant un plan de déplacement défini dans une position où il peut être vidé, **caractérisé en ce que** l'on fait basculer le récipient de collecte ou de transport, le plan de déplacement et ainsi l'opération de basculement du récipient de collecte ou de transport pouvant être accéléré ou retardé en fonction de l'opération présente consistant à vider le récipient et/ou en tenant compte de la vitesse et/ou de la quantité des marchandises basculées.

2. Procédé pour vider de manière automatisée des récipients suivant la revendication 1,
**caractérisé en ce que**
on détecte l'opération présente dans laquelle on vide le récipient par une technique de capteur, de préférence à plusieurs dimensions, et on l'exploite dans une analyse de données de capteur, qui est couplée à la commande de l'entraînement du dispositif de basculement du récipient de collecte ou de transport.

3. Procédé pour vider de manière automatisée des récipients suivant la revendication 1 et 2,
**caractérisé en ce que**
on détecte l'opération présente dans laquelle on vide le récipient de collecte ou de transport au moyen d'une technique de reconnaissance d'images ou d'un scanner en 3D et **en ce que**, après avoir exploité des informations obtenues dans un ordinateur, on se rend maître du nombre des marchandises quittant le récipient de collecte ou de transport en retardant ou en accélérant l'opération de basculement.

4. Procédé pour vider de manière automatisée des récipients suivant l'une des revendications 1 à 3,
**caractérisé en ce que**
au moyen de la technique de capteur, on détecte que le récipient de collecte ou de transport est vidé complètement, opération qui fait débuter l'opération de pivotement du dispositif de basculement pour ramener le récipient de collecte ou de transport dans la position initiale.

5. Dispositif pour vider de manière automatisée des récipients ( 1 ) contenant des marchandises comprenant un conteneur ( 1 ) roulant recevant des marchandises ( 2 ), un dispositif de basculement, un dispositif ( 4 ) d'évacuation avant ou dans un dispositif d'individualisation et/ou un trieur et un entraînement ( 5 ) pour faire débuter l'opération de basculement du conteneur ( 1 ) roulant, ainsi qu'une commande de l'entraînement ( 5 ) et une technique ( 6 ) de capteur, qui est couplée à la commande de l'entraînement ( 5 ) et qui détecte que l'opération dans laquelle on vide des récipients a lieu présentement et qui est constituée de manière à rendre possible le plan de déplacement suivant la revendication 1.
